Europäisches Patentamt

European Patent Office

Office européen des brevets

(11) Veröffentlichungsnummer: **0 250 695**
**B1**

(12) **EUROPÄISCHE PATENTSCHRIFT**

(45) Veröffentlichungstag der Patentschrift:
04.04.90

(21) Anmeldenummer: 86890169.5

(22) Anmeldetag: 06.06.86

(51) Int. Cl.⁴: **B01D 29/96, B01D 29/66**

(54) Filter.

(43) Veröffentlichungstag der Anmeldung:
07.01.88 Patentblatt 88/1

(45) Bekanntmachung des Hinweises auf die Patenterteilung:
04.04.90 Patentblatt 90/14

(84) Benannte Vertragsstaaten:
BE CH DE FR GB IT LI LU NL SE

(56) Entgegenhaltungen:
CH-A- 260 848
CH-A- 515 049
DE-A- 2 522 078
DE-A- 2 705 560
DE-A- 2 947 673
DE-A- 2 947 685
DE-B- 1 238 198
FR-A- 2 409 847
FR-A- 2 481 998
GB-A- 1 602 585

(73) Patentinhaber: EREMA Engineering-Recycling-Maschinen-Anlagen Gesellschaft m.b.H., Unterfeldstrasse 3 Freindorf, A-4052 Ansfelden/Linz(AT)

(72) Erfinder: Bacher, Helmut, Mittelpromenade 6, A-4040 Puchenau(AT)
Erfinder: Schulz, Helmut, Enzing 19, A-4090 St. Florian(AT)
Erfinder: Wendelin, Georg, Am Hartmayrgut 5, A-4040 Linz(AT)

(74) Vertreter: Brauneiss, Leo et al, Patentanwälte Dipl.-Ing. Peter Boeckmann, Dipl.-Ing. Leo Brauneiss Strohgasse 10, A-1030 Wien(AT)

**Beschreibung**

Die Erfindung betrifft ein Filter für eine Vorrichtung zum Extrudieren von thermoplastischem Kunststoffmaterial, mit einem wenigstens einen mit einer Einlaßöffnung für die Zufuhr des zu filtrierenden Materiales in Verbindung stehenden Einlaßkanal sowie wenigstens einen mit einer Auslaßöffnung für die Abfuhr des filtrierten Materiales in Verbindung stehenden Auslaßkanal aufweisenden Gehäuse, in dem wenigstens zwei Trägerkörper verschiebbar angeordnet sind, wobei jeder Trägerkörper eine Siebanordnung trägt, durch die in der Betriebsstellung des Trägerkörpers das zu filtrierende Material von der mit dem Einlaßkanal verbundenen Einlaßseite der Siebanordnung zur in den Auslaßkanal mündenden Auslaßseite hindurchtritt.

Vor allem bei der Herstellung dünnwandiger Gegenstände aus thermoplastischem Kunststoff muß die aus dem Extruder austretende Kunststoffschmelze filtriert werden, um ein fehlerloses Produkt zu erhalten. In der Regel erfolgt die Filtrierung durch eine im Flußkanal zwischen der Extruderschnecke und der Extruderdüse angeordnete Lochplatte und eine in Flußrichtung der extrudierten Kunststoffschmelze vor der Lochplatte befindliche Siebanordnung.

Bei der Wiederverwertung von Kunststoffabfall im Extruder ist es nun, bedingt durch den höheren Schmutzanteil, erforderlich, daß die verschmutzte Siebanordnung während der Extrusion gereinigt und/oder gewechselt werden muß. Hiefür sind bereits verschiedene Vorrichtungen bekannt.

So wurde bereits vorgeschlagen (FR-A 2 409 847), mehrere Siebanordnungen in einem Trägerkörper anzuordnen, der quer zur Flußrichtung des zu filtrierenden Materiales verschiebbar ange ordnet ist. Der Trägerkörper kann hiebei linear verschoben werden oder aus einem verdrehbaren Revolverkopf bestehen. Bei einer Verschmutzung einer Siebanordnung wird durch Verschieben bzw. Verdrehen des Trägerkörpers diese durch eine neue Siebanordnung ersetzt. Nachteilig ist, daß in der Wechselphase eine Unterbrechung des Schmelzenflusses erfolgt und daß während dieser Unterbrechung im Flußkanal in Flußrichtung vor der Siebanordnung ein unerwünschter Druckanstieg stattfindet.

Bei einer weiteren bekannten Anlage der eingangs beschriebenen Art (DE-OS 2 811 771) sind im Druckkanal zwei Siebanordnungen parallel angeordnet, wobei der Austausch der verschmutzten Siebanordnungen nacheinander erfolgt, so daß immer zumindest eine Siebanordnung in Betriebsstellung ist. Dadurch wird zwar eine vollständige Unterbrechung des Schmelzenflusses verhindert, bei einem Austausch einer Siebanordnung erfolgt jedoch auch hier ein unerwünschter Druckanstieg im Flußkanal in Flußrichtung vor den Siebanordnungen.

Um auch diesen unerwünschten Druckanstieg weitgehend zu vermeiden, hat man bereits vorgeschlagen, vier Siebanordnungen vorzusehen, wobei stets zwei Siebanordnungen parallel im Flußkanal angeordnet sind. Jede dieser beiden Siebanordnungen befindet sich gemeinsam mit einer weiteren Siebanordnung auf einem Trägerkörper, so daß bei dessen Verschiebung sofort eine verschmutzte Siebanordnung durch die andere auf dem gemeinsamen Trägerkörper befindliche Siebanordnung ersetzt wird. Nachteilig ist bei dieser Ausführung der hohe konstruktive Aufwand, der die Verwendung von vier Siebanordnungen bewirkt.

Man hat auch vorgeschlagen (DE-B 1 238 198), zwei parallele Flußkanäle mit Siebanordnungen vorzusehen, wobei in Flußrichtung vor den Siebanordnungen ein Mehrwegeschieber vorgesehen ist, bei dessen Umlegung das zu filtrierende Material kurzzeitig im Gegenstrom durch eine der beiden Siebanordnungen geleitet wird, wodurch der an der Eintrittsseite dieser Siebanordnung abgesetzte Schmutz abgehoben und über einen gesonderten Kanal ausgetragen wird. Nachteilig ist hiebei die Anordnung eines gesonderten Mehrwegeschiebers. Vor allem aber ist bei dieser bekannten Vorrichtung das Wechseln der Siebanordnungen nur nach Stillsetzung der Anlage möglich. Bei starker Verschmutzung ist aber eine Reinigung der Siebanordnungen im Gegenstromverfahren nicht ausreichend, sondern es muß ein Siebaustausch vorgenommen werden.

Die vorliegende Erfindung hat sich zur Aufgabe gestellt, die Nachteile der bekannten Konstruktionen zu vermeiden und ein Filter zu schaffen, bei welchem in konstruktiv einfacher Weise nicht nur eine Reinigung der Siebanordnungen möglich ist, sondern ohne Stillsetzung der Vorrichtung, in der das Filter eingebaut ist, auch ein Austausch der Siebanordnungen möglich ist. Die Erfindung geht hiebei aus von einem Filter der eingangs beschriebenen Art und besteht im wesentlichen darin, daß in jedem Trägerkörper ein mit der Austrittsseite der in diesem Trägerkörper vorgesehenen Siebanordnung in Verbindung stehender Spülkanal vorgesehen ist, der bei einer Verschiebung des Trägerkörpers in eine Spülstellung mit dem Auslaßkanal verbindbar ist, und daß in dieser Spülstellung der Trägerkörper die Einlaßseite der Siebanordnung zumindest teilweise mit einem die Siebverunreinigungen aufnehmenden Raum in Verbindung steht bzw. ins Freie offen ist. Die erfindungsgemäße Ausbildung ermöglicht es, lediglich durch eine Verschiebung eines Trägerkörpers diesen aus der Betriebsstellung in eine Stellung, nämlich in die Spülstellung zu bringen, in der durch die besondere Ausbildung des erfindungsgemäßen Filters eine Reinigung der auf diesem Trägerkörper befindlichen Siebanordnung im Gegenstrom erfolgt, das heißt, bei welcher ein Teil der bereits durch die andere Siebanordnung filtrierten Schmelze von der Auslaßseite her durch die Siebanordnung gedrückt wird, so daß die an der Einlaßseite dieser Siebanordnung befindlichen Verunreinigungen von dieser Einlaßseite abgehoben und in den diese Verunreinigungen aufnehmenden Raum transportiert werden bzw. ins Freie austreten können. Es ist somit bei der erfindungsgemäßen Siebanordnung kein gesonderter Mehrwegeschieber erforderlich, der bei seiner Betätigung über zusätzliche Strömungskanäle eine Umkehr der Strömungsrichtung in einer Siebanordnung bewirkt, son-

dern es ist lediglich die Anordnung eines einzigen Spülkanales im Trägerkörper erforderlich und es wird die Umkehr der Strömungsrichtung nur durch Verschiebung dieses Trägerkörpers hervor gerufen.

Eine besonders einfache Ausführungsform ergibt sich dann, wenn jeder Trägerkörper in einer an wenigstens einer Gehäuseseite offenen Ausnehmung verschiebbar gelagert ist, wobei in der Spülstellung die Siebanordnung zumindest teilweise aus dem Gehäuse herausragt, so daß die Umgebung des Gahäuses den die Siebverunreinigungen aufnehmenden Raum bildet.

Wie bereits erwähnt, ermöglicht die vorliegende Erfindung auch auf einfache Weise einen Austausch der Siebanordnungen, ohne daß hiezu die Vorrichtung, in der das erfindungsgemäße Filter angeordnet ist, stillgesetzt werden muß. Hiezu ist erfindungsgemäß jeder Trägerkörper über die Spülstellung hinaus in eine Stellung verschiebbar, in der die Siebanordnung zur Gänze außerhalb des Gehäuses angeordnet ist und daher leicht ausgebaut und durch eine neue Siebanordnung ersetzt werden kann.

Gemäß einem weiteren Merkmal der Erfindung ist jeder Trägerkörper in einer an beiden gegenüberliegenden Gehäuseseiten offenen Ausnehmung angeordnet, und an einem seiner Stirnenden mit einem Druckmittel betätigten Kolben verbunden, der die Verschiebung dieses Trägerkörpers bewirkt. Diese Verschiebung kann hiebei automatisch dadurch gesteuert werden, daß erfindungsgemäß im Einlaßkanal ein Druckfühler vorgesehen ist, der die Druckmittelzufuhr zu den Kolben steuert, so daß bei einer Verschmutzung der Siebanordnungen, durch welche ein Druckanstieg im Einlaßkanal hervorgerufen wird, Druckmittel den einzelnen Kolben nacheinander zugeführt wird und dadurch ein Trägerkörper nach dem anderen in die Spülstellung gebracht wird.

In der Zeichnung ist die Erfindung an Hand eines Ausführungsbeispieles dargestellt, welches schematisch ein erfindungsgemäßes Filter zeigt.

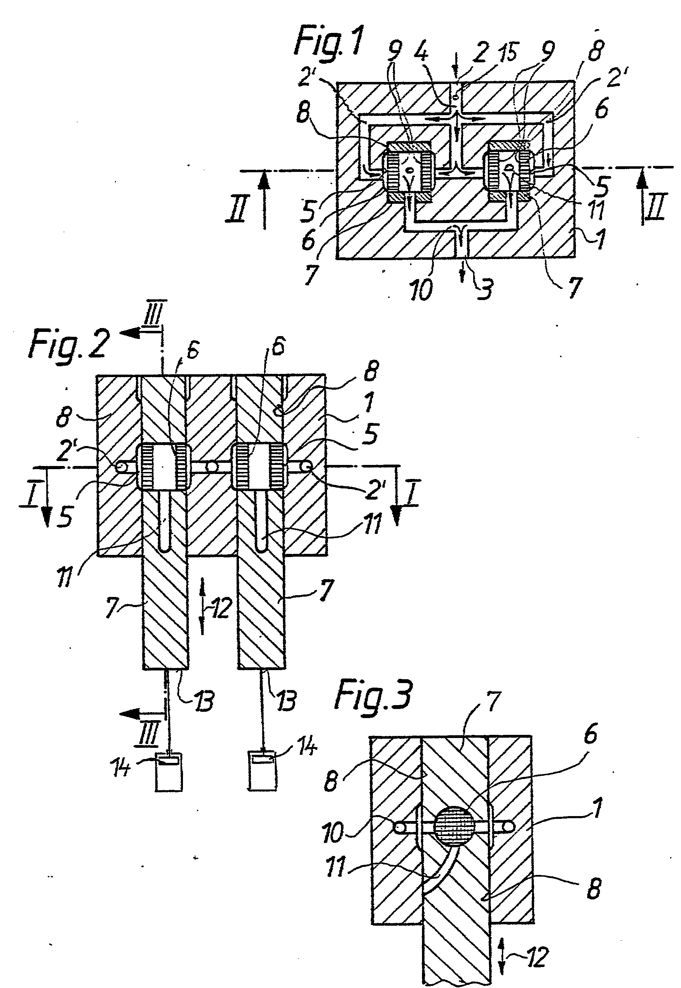

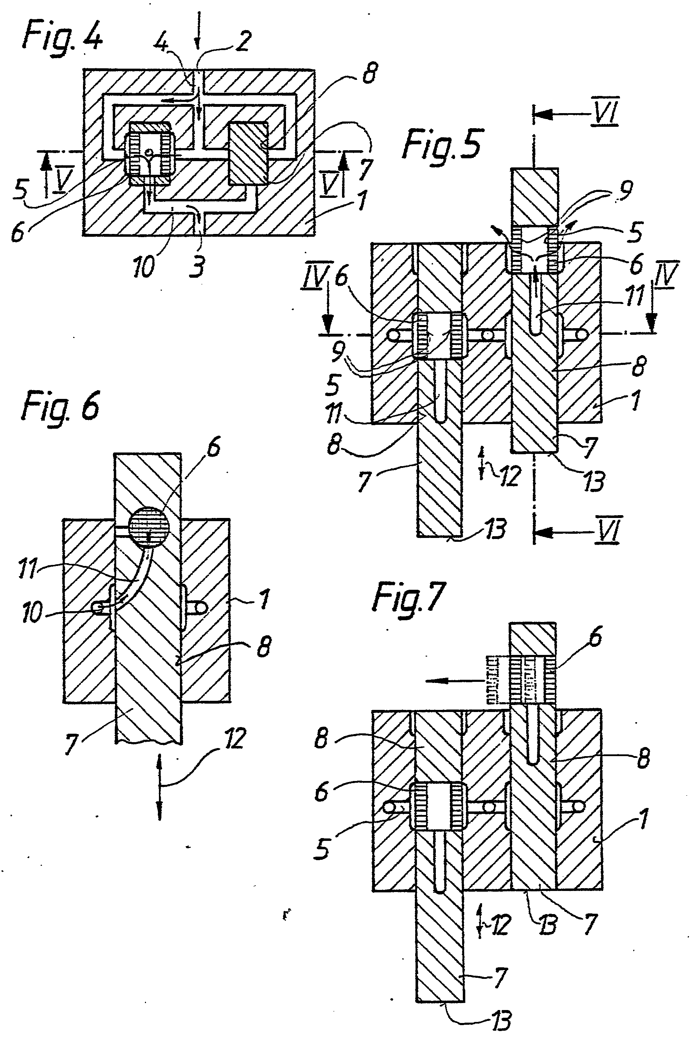

Die Fig. 1 bis 3 zeigen das erfindungsgemäße Filter mit in der Betriebsstellung befindlichen Trägerkörpern, wobei Fig. 1 einen Schnitt nach der Linie I - I in Fig. 2, Fig. 2 einen Schnitt nach der Linie II - II in Fig. 1 und Fig. 3 einen Schnitt nach der Linie III - III in Fig. 2 darstellt. Die Fig. 4 bis 6 zeigen das erfindungsgemäße Filter, wobei sich einer der beiden Trägerkörper in der Spülstellung befindet. Fig. 4 stellt wieder einen Schnitt nach der Linie IV - IV in Fig. 5, Fig. 5 einen Schnitt nach der Linie V - V in Fig. 4 und Fig. 6 einen Schnitt nach der Linie VI - VI in Fig. 5 dar. Fig. 7 zeigt in einer Darstellung analog zu den Fig. 2 bzw. 5 das erfindungsgemäße Filter, bei welchem einer der beiden Trägerkörper eine das Auswechseln der Siebanordnung ermöglichende Stellung aufweist.

Das erfindungsgemäße Filter weist ein Gehäuse 1 auf, das mit einer Einlaßöffnung 2 für das zu filtrierende Material und mit einer Auslaßöffnung 3 für das filtrierte Material versehen ist. Die Einlaßöffnung 2 setzt sich in einem Einlaßkanal 4 fort, der in der Betriebsstellung über Zustromkanäle 2' mit den Einlaßseiten 5 zweier aus je einem Doppelfilter bzw. einem Siebpaar bestehender Siebanordnungen 6 in Verbindung steht. Jede der beiden Siebanordnungen 6 ist in einem Trägerkörper 7 angeordnet, wobei jeder Trägerkörper 7 in einer an gegenüberliegenden Seiten des Gehäuses 1 offenen Ausnehmung 8 verschiebbar gelagert ist. Die Auslaßseite 9 der Siebanordnungen 6 steht in der Betriebsstellung über einen Auslaßkanal 10 mit der Auslaßöffnung 3 des Gehäuses 1 in Verbindung. In der in den Fig. 1 bis 3 dargestellten Betriebsstellung der Siebanordnungen 6 bzw. der Trägerkörper 7 werden somit beide Siebanordnungen 6 parallel von dem zu filtrierenden Material durchströmt.

Wie aus Fig. 3 hervorgeht, ist in jedem Trägerkörper 7 ein Spülkanal 11 vorgesehen, der mit der Auslaßseite 9 der in diesem Trägerkörper befindlichen Siebanordnung 6 in Verbindung steht, der jedoch in der Betriebsstellung durch die Wand der Ausnehmung 8 abgeschlossen ist.

Jeder der beiden Trägerkörper 7 kann gesondert in Richtung des Doppelpfeiles 12 mittels eines druckmittelbetätigten Kolbens 14 verschoben werden, dessen Kolbenstange an der Stirnseite 13 des Trägerkörpers 7 angreift. Die Druckmittelzufuhr zum Kolben kann durch einen Druckfühler 15 im Einlaßkanal 4 gesteuert werden, der bei einer Druckerhöhung im Einlaßkanal 4 zunächst die Verschiebung des einen Trägerkörpers 7 zur Einleitung eines Spülvorganges der an diesem Trägerkörper angeordneten Siebanordnung und nach Beendigung dieses Spülvorganges eine Verschiebung des anderen Trägerkörpers 7 zwecks Durchführung eines Spülvorganges bei der an diesem Trägerkörper angeordneten Siebanordnung bewirkt. Ein solcher Druckanstieg im Einlaßkanal 4 erfolgt nämlich dann, wenn infolge einer Verunreinigung der Siebanordnungen die Durchsatzmenge durch diese Siebanordnungen verringert wird.

In den Fig. 4 bis 6 ist nun eine Verschiebung des in der Zeichnung rechts dargestellten Trägerkörpers 7 bzw. der an diesem Trägerkörper angeordneten Siebanordnung 6 in die Spülstellung gezeigt. In dieser Spülstellung wird eine Verbindung des Spülkanales 11 mit dem Auslaßkanal 10 hergestellt, so daß die Auslaßseite 9 der in der Zeichnung rechts dargestellten Siebanordnung 6 über den Spülkanal 11 mit bereits filtriertem Material beaufschlagt wird, wogegen die Verbindung der Einlaßseite 5 mit dem Einlaßkanal 4 unterbrochen wird. Wie aus Fig. 5 hervorgeht, ragt in dieser Spülstellung die Filteranordnung 6 teilweise aus dem Gehäuse heraus, so daß das in Gegenstrom durch die Auslaßseite 9 eintretende filtrierte Material an der freigelegten Stelle der Einlaßseite 5 austreten kann und die an dieser Einlaßseite 5 vorhandenen Siebverunreinigungen bzw. Schmutzteilchen abhebt und abtransportiert. Nach Austritt von ca. 100 bis 500 cm³ des filtrierten Materiales wird der Trägerkörper 7 wieder in die in den Fig. 1 bis 3 dargestellte Betriebsstellung gebracht und hierauf die beschriebene Vorgangsweise mit der anderen Siebanordnung 6 bzw. dem anderen Trägerkörper 7 wiederholt.

Ist ein Auswechseln einer Siebanordnung 6 erforderlich, so wird der Trägerkörper 7 über die in den Fig. 4 bis 6 dargestellte Stellung hinaus in eine in Fig. 7 rechts dargestellte Stellung verschoben, in welcher sich die Siebanordnung 6 vollständig außerhalb des Gehäuses 1 befindet. In dieser Stellung ist auch die Zufuhr des filtrierten Materiales über den Spülkanal 11 unterbrochen, sowohl Einlaßseite 5 als auch Auslaßseite 9 der Siebanordnung 6 sind drucklos, so daß die Siebanordnung ausgewechselt werden kann. Hiebei kann der Betrieb der Vorrichtung, in die das erfindungsgemäße Filter eingebaut ist, über die jeweils andere Siebanordnung aufrecht erhalten werden.

## Patentansprüche

1. Filter für eine Vorrichtung zum Extrudieren von thermoplastischem Kunststoffmaterial, mit einem wenigstens einen mit einer Einlaßöffnung (2) für die Zufuhr des zu filtrierenden Materiales in Verbindung stehenden Einlaßkanal (4) sowie wenigstens einen mit einer Auslaßöffnung (3) für die Abfuhr des filtrierten Materiales in Verbindung stehenden Auslaßkanal (10) aufweisenden Gehäuse (1), in dem wenigstens zwei Trägerkörper (7) verschiebbar angeordnet sind, wobei jeder Trägerkörper (7) eine Siebanordnung (6) trägt, durch die in der Betriebsstellung des Trägerkörpers (7) das zu filtrierende Material von der mit dem Einlaßkanal verbundenen Einlaßseite (5) der Siebanordnung (6) zur in den Auslaßkanal (10) mündenen Auslaßseite hindurchtritt, dadurch gekennzeichnet, daß in jedem Trägerkörper (7) ein mit der Austrittsseite (9) der in diesem Trägerkörper (7) vorgesehenen Siebanordnung (6) in Verbindung stehender Spülkanal (11) vorgesehen ist, der bei einer Verschiebung des Trägerkörpers (7) in eine Spülstellung mit dem Auslaßkanal (10) verbindbar ist, und daß in dieser Spülstellung des Trägerkörpers (7) die Einlaßseite (5) der Siebanordnung (6) zumindest teilweise mit einem die Siebverunreinigungen aufnehmenden Raum in Verbindung steht bzw. ins Freie offen ist.

2. Filter nach Anspruch 1, dadurch gekennzeichnet, daß jeder Trägerkörper (7) in einer an wenigstens einer Gehäuseseite offenen Ausnehmung (8) verschiebbar gelagert ist, wobei in der Spülstellung die Siebanordnung (6) zumindest teilweise aus dem Gehäuse (1) herausragt, so daß die Umgebung des Gehäuses (1) den die Siebverunreinigungen aufnehmenden Raum bildet.

3. Filter nach Anspruch 1 und 2, dadurch gekennzeichnet, daß jeder Trägerkörper (7) über die Spülstellung hinaus in eine Stellung verschiebbar ist, in der die Siebanordnung (6) zur Gänze außerhalb des Gehäuses (1) angeordnet ist.

4. Filter nach Anspruch 1, 2 oder 3, dadurch gekennzeichnet, daß jeder Trägerkörper (7) in einer an beiden gegenüberliegenden Gehäuseseiten offenen Ausnehmung (8) angeordnet ist und an einem seiner Stirnenden (13) mit einem druckmittelbetätigten Kolben (14) verbunden ist.

5. Filter nach Anspruch 4, dadurch gekennzeichnet, daß im Einlaßkanal (4) ein Druckfühler (15) vorgesehen ist, der die Druckmittelzufuhr zu den Kolben (14) steuert.

## Revendications

1. Filtre pour un dispositif d'extrusion de matière synthétique thermoplastique, avec un corps (1) comportant au moins un canal d'admission (4) communiquant avec une ouverture d'entrée (2) pour l'amenée de la matière à filtrer, et comportant également au moins un canal d'évacuation (10) communiquant avec une ouverture de sortie (3) pour l'évacuation de la matière filtrée, deux éléments supports (7) au minimum étant disposés coulissant dans le corps (1), chaque élément support (7) supportant un système de tamis (6) par l'intermédiaire duquel, dans la position de fonctionnement de l'élément support (7), la matière à filtrer, depuis le côté admission (5) du système de tamis (6) relié au canal d'admission passe sur le côté sortie débouchant dans le canal d'évacuation (10), le dispositif étant caractérisé en ce qu'il est prévu dans chaque élément porteur (7) un canal de rinçage (11) relié au côté sortie (9) du système de tamis (6) prévu dans cet élément support (7), ce canal de rinçage, lors d'un déplacement de l'élément support (7) dans une position de rinçage, pouvant être mis en communication avec le canal d'évacuation (10), le côté admission (5) du système de tamis (6), dans cette position de rinçage de l'élément support (7), communiquant tout au moins partiellement avec un emplacement recevant les impuretés de tamisage, et respectivement s'ouvrant sur l'atmosphère libre.

2. Filtre selon la revendication 1, caractérisé en ce que chaque élément support (7) est monté coulissant dans un évidement (8) ouvert tout au moins sur un côté du corps, le système de tamis (6), dans la position de rinçage, dépassant tout au moins partiellement hors du corps (1), de sorte que l'environnement du corps (1) constitue l'espace recevant les impuretés de tamisage.

3. Filtre selon les revendications 1 et 2, caractérisé en ce que chaque élément support (7) peut coulisser au-delà de la position de rinçage, jusque dans une position dans laquelle le système de tamis (6) se trouve disposé en totalité à l'extérieur du corps (1).

4. Filtre selon les revendications 1, 2 ou 3, caractérisé en ce que chaque élément support (7) est monté dans un évidement (8) ouvert sur deux côtés du corps en regard, et en ce que chacun de ces éléments supports, à une de ses extrémités frontales (13), est relié à un piston actionné hydrauliquement (14).

5. Filtre selon la revendication 4, caractérisé en ce qu'un capteur de pression (15) est prévu dans le canal d'admission (4), ce capteur de pression commandant l'alimentation en moyen de pression sur les pistons (14).

## Claims

1. A filter for a device for extruding thermoplastic plastics material, with a housing (1) having at least one inlet duct (4) connected with an inlet opening (2) for the supply of the material to be filtered, and at least one outlet duct (10) connected with an outlet opening (3) for the discharge of the filtered material, in which housing at least two carrier elements (7) are displaceably arranged, each carrier element (7) bearing a sieve arrangement (6), through which in the operating position of the carrier element (7) the material to be filtered passes from the inlet side (5) of the sieve arrangement (6) connected with the inlet duct to the outlet side opening into the outlet duct (10), characterised in that in each carrier element (7) a rinsing duct (11) is provided, which is connected with the outlet side (9) of the sieve arrangement (6) provided in the said carrier element (7) and which upon a displacement of the carrier element (7) into a rinsing position can be connected with the outlet duct (10), and in that in the said rinsing position of the carrier element (7), the inlet side (5) of the sieve arrangement (6) is at least partially connected with a space receiving the sieve impurities or is open towards the outside.

2. A filter according to claim 1, characterised in that each carrier element (7) is displaceably mounted in a recess (8) which is open on at least one side of the housing, the sieve arrangement (6) at least partially projecting from the housing (1) in the rinsing position, so that the surroundings of the housing (1) form the space receiving the sieve impurities.

3. A filter according to claims 1 and 2, characterised in that each carrier element (7) can be displaced beyond the rinsing position into a position in which the sieve arrangement (6) is arranged entirely outside the housing (1).

4. A filter according to claim 1, 2 or 3, characterised in that each carrier element (7) is arranged in a recess (8) opening on both opposite sides of the housing and is connected at one of its end faces (13) with a piston (14) actuated by a pressure medium.

5. A filter according to claim 4, characterised in that a pressure sensor (15), which controls the supply of pressure medium to the piston (14), is arranged in the inlet duct (4).

Fig.1

Fig.2

Fig.3

Fig. 4

Fig. 5

Fig. 6

Fig. 7